# EUROPEAN PATENT SPECIFICATION

(11) **EP 3 920 619 B1**
(45) Date of publication and mention of the grant of the patent: **07.10.2026**
(21) Application number: 20748528.5
(22) Date of filing: 08.01.2020
(51) Int. Cl.: H04W 72/1268, H04W 74/0833, H04W 74/0808, H04W 74/0836

(54) **INFORMATION TRANSMISSION METHOD AND TERMINAL DEVICE**
INFORMATIONSÜBERTRAGUNGSVERFAHREN UND ENDGERÄTEVORRICHTUNG
PROCÉDÉ DE TRANSMISSION D'INFORMATIONS ET DISPOSITIF TERMINAL

(30) Priority: 01.02.2019 CN 201910105312
(43) Date of publication of application: 08.12.2021
(73) Proprietor: VIVO MOBILE COMMUNICATION CO., LTD., Dongguan, Guangdong 523860 (CN)
(72) Inventor: CHEN, Xiaohang, Dongguan, Guangdong 523860 (CN); SHEN, Xiaodong, Dongguan, Guangdong 523860 (CN)
(74) Representative: Murgitroyd & Company
(86) International application number: PCT/CN2020/070905
(87) International publication number: WO 2020/156071

(56) References cited:
- WO-A1-2021/076516
- CN-A- 101 938 701
- CN-A- 108 513 732
- CN-A- 109 168 147
- US-A1- 2013 301 570
- US-A1- 2018 270 859
- US-B1- 8 831 150
- NOKIA ET AL: "On 2-step Random Access Procedure", vol. RAN WG1, no. Taipei, Taiwan; 20190121 - 20190125, 20 January 2019 (2019-01-20), XP051594034, Retrieved from the Internet <URL:http://www.3gpp.org/ftp/Meetings%5F3GPP%5FSYNC/RAN1/Docs/R1%2D1901192%2Ezip> [retrieved on 20190120]
- LG ELECTRONICS: "Remaining issues on group common PDCCH", 3GPP TSG RAN WG1 #93, R1-1806617, 12 May 2018 (2018-05-12), XP051462657, DOI: 20200318111207A

## Description

### CROSS-REFERENCE TO RELATED APPLICATION

The present disclosure claims priority to Chinese Patent 201910105312.1 filed in China on February 1, 2019.

### TECHNICAL FIELD

The present disclosure relates to the technical field of communication, and more particularly, to an information transmission method, terminal devices and a computer-readable medium.

### BACKGROUND

In the previous mobile communication system, if the terminal device needs to transmit uplink data, it is necessary to acquire uplink timing synchronization through a random access process, that is, acquire uplink timing advance (Timing advance, TA) information from a network end. After uplink synchronization is acquired, the terminal device may transmit uplink data through dynamic scheduling or semi-static scheduling. Generally, the terminal device initiates a random access process including four processes to acquire the uplink timing synchronization.

Compared with the previous mobile communication system, the future mobile communication system (for example, 5G) needs to adapt to more diverse scenes and service requirements. The main scene of a new radio (New Radio, NR) includes an enhanced mobile broadband (Enhance Mobile Broadband, eMBB), massive machine type communication (Massive Machine Type Communication, mMTC) and ultra reliable & low latency communication (Ultra Reliable & Low Latency Communication, URLLC). These scenes require high reliability, low latency, large bandwidth and wide coverage. In these scenes, if the uplink data packet is small, the way of transmitting uplink data after acquiring uplink synchronization through the random access process will cause consumption of resources and electric quantity; therefore, the terminal device may also transmit the uplink data in an asynchronous state. That is, the terminal device may initiate the random access process including two steps to transmit data in the asynchronous state and acquire uplink timing synchronization.

When initiating the random access process including two steps, the terminal device will transmit physical random access channel (Physical Random Access Channel, PRACH) and physical uplink shared channel (Physical Uplink Shared Channel, PUSCH). In a time division duplexing (Time Division Duplexing) mode, for a certain transmission time, the transmission direction is determined according to TDD configuration information. If the time when the terminal device initiates the random access process including two steps to transmit PRACH and PUSCH is the downlink transmission time configured by the TDD configuration information (or it may be understood that the resources for transmitting the PRACH and the PUSCH conflict with the configured downlink transmission resource), it will bring interference to the downlink transmission of the network device.

D1 (US20130301570A1) discloses that a method of wireless communications includes adapting to downlink/uplink resource allocations. In particular, the downlink/uplink communications may be adjusted according to time division duplexed (TDD) configurations of serving and neighbor cells.

D2 (R1-1901192) discloses that Proposal 1: study the allowed MsgA payload size considering MsgA content from RAN2 for the different 2-step RA CH use cases, and Proposal 2: study the allowed MsgB payload size considering MsgB content from RAN2 for the different 2-step RACH use cases, and Proposal 3: study the size of the time advance field and UL grant field of Msg B, and Proposal 4: study various options for 2-step RACH MsgB transmission, and Proposal 5: the resources and link parameters for MsgA preamble and data signal transmission are configured by the base station, and the UE might do further selection based on the configuration, and Proposal 6: study methods for the UE to indicate to the network the parameters (e.g. MCS, payload size and the resource size, etc.) used for the transmission of the payload of MsgA in case the UE is allowed flexibility for transmission of data, and Proposal 7: study different options for having the gNB direct the UE to fall back from the 2-step RACH procedure to the 4-step RACH procedure when the preamble is detected by the gNB but the MsgA data signal is not detected.

### SUMMARY

An objective of an embodiment of the present disclosure is to provide an information transmission method, so as to solve the problem that it will bring interference to the downlink transmission when the terminal device transmits PRACH and PUSCH on the resource which conflicts with the configured downlink resource. The invention is defined by the appended independent claims and further embodiments are described by the dependent claims, as follows.

According to a first aspect, an information transmission method is provided and is applied to a terminal device, which is defined in claim 1.

According to a second aspect, a terminal device which is defined in claim 6 is provided.

According to a third aspect, a terminal device which is defined in claim 11 is provided.

According to a fourth aspect, a computer readable storage medium which is defined in claim 12 is provided.

Further advantageous embodiments of the present application are indicated in the dependent claims. It is to be understood that both the foregoing general description and the following detailed description are exemplary only, are not restrictive of the present disclosure.

### BRIEF DESCRIPTION OF THE DRAWINGS

The accompanying drawings are used to provide further understanding of the present disclosure and constitute a part of the present disclosure. The exemplary embodiments of the present disclosure and the description thereof serve to explain the present disclosure, but do not constitute an improper limitation to the present disclosure. In the accompanying drawings:
FIG. 1 is a schematic flowchart of an information transmission method according to the present disclosure.
FIG. 2 is a schematic diagram of an association relationship between a PRACH transmission occasion and a PUSCH transmission occasion according to the present disclosure.
FIG. 3 is a schematic diagram of an association relationship between a PRACH transmission occasion and a PUSCH transmission occasion according to the present disclosure.
FIG. 4 is a schematic flowchart of an information transmission method according to the present disclosure.
FIG. 5 is a structural schematic diagram of a terminal device according to the present disclosure.
FIG. 6 is a structural schematic diagram of a terminal device according to the present disclosure.
FIG. 7 is a structural schematic diagram of a terminal device according to yet the present disclosure.

### DETAILED DESCRIPTION OF EMBODIMENTS

The technical solutions in the embodiments of the present disclosure are described below clearly and completely with reference to the accompanying drawings in the embodiments of the present disclosure. Apparently, the described embodiments are some rather than all of the embodiments of the present disclosure. All other embodiments obtained by a person of ordinary skill in the art based on the embodiments of the present disclosure without creative efforts shall fall within the protection scope of the present disclosure.

The technical solution of the embodiments of the present disclosure may be applied to various communication systems, for example: a long terminal evolution (Long Term Evolution, LTE)/long term evolution advanced (Long Term Evolution Advanced, LTE-A) system, an LTE frequency division duplex (Frequency Division Duplex, FDD) system, an LTE time division duplex (Time Division Duplex, TDD) system, a 5G system, or a new radio (New Radio, NR) system.

In the embodiments of the present disclosure, a terminal device (User Equipment, UE), which may also be called a mobile terminal (Mobile Terminal), mobile user equipment, etc., may communicate with one or more core networks through a radio access network (for example, Radio Access Network, RAN). The user equipment may be a mobile terminal, such as a mobile phone (or called "cell" phone) and a computer with a mobile terminal, for example, it may be portable, pocket, handheld, computer in-built or vehicle-mounted mobile devices, which exchange language and/or data with the radio access network.

In the embodiments of the present disclosure, a network device is a device which is deployed in a wireless access network and used to provide a wireless communication function for the terminal device. The network, for example, may be a base station, where the base station may be an evolved node B (eNB or e-NodeB, evolutional Node B) and a 5G node B (gNB) in LTE.

The technical solutions in various embodiments of the present disclosure are described below in detail with reference to the accompanying drawings.

In the embodiments of the present disclosure, that the physical random access channel (Physical Random Access Channel, PRACH) transmission occasion (occasion) is valid (Valid) may be understood that there is no conflict between a time domain resource where the PRACH occasion is and the downlink (Downlink, DL) resource or DL transmission, and the terminal device may transmit the random access message on the valid PRACH transmission occasion.

In the embodiments of the present disclosure, that the physical uplink shared channel (Physical Uplink Shared Channel, PUSCH) transmission occasion (occasion) is valid (Valid) may be understood that there is no conflict between the PUSCH occasion and the DL resource or DL transmission, and the terminal device may transmit PUSCH on the valid PUSCH occasion. That the PUSCH occasion is invalid may be understood that there is a conflict between the PUSCH occasion and the DL resource or DL transmission.

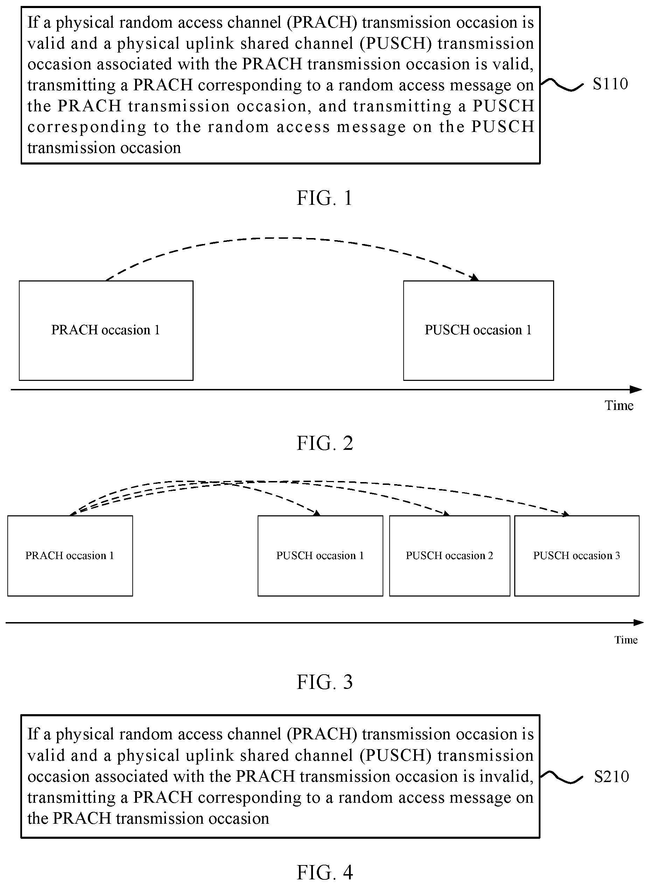

FIG. 1 shows an information transmission method according to the present disclosure. The method in FIG. 1 may be performed by the terminal device. As shown in FIG. 1, the method includes:
S110: if a physical random access channel (PRACH) transmission occasion is valid and a physical uplink shared channel (PUSCH) transmission occasion associated with the PRACH transmission occasion is valid, a PRACH corresponding to a random access message is transmitted on the PRACH transmission occasion, and a PUSCH corresponding to the random access message is transmitted on the PUSCH transmission occasion.

It should be noted that in S110, that if the PRACH transmission occasion is valid and the PUSCH transmission occasion associated with the PRACH transmission occasion is valid, the PRACH corresponding to the random access message is transmitted on the PRACH transmission occasion, and the PUSCH corresponding to the random access message is transmitted on the PUSCH transmission occasion may be understood that if the PRACH transmission occasion is valid and the PUSCH transmission occasion associated with the PRACH transmission occasion is valid, the random access message is transmitted, where the random access message is carried on the PRACH and the PUSCH.

Optionally, in some embodiments, the random access message in S110 is an msg A in a 2-step (2-step) random access process, and the terminal device may transmit the msg A to the network device when initiating RACH transmission to the network device in the 2-step random access process. In this case, the msg A corresponds to the PRACH and the PUSCH. Subsequently, for the convenience of description, the PRACH corresponding to the msg A is described as msg A PRACH, and the PUSCH corresponding to the msg A is described as msg A PUSCH.

That random access message (msg A) transmitted by the terminal device corresponds to the PRACH and the PUSCH in the 2-step random access step may also be understood that the random access message is carried on the PRACH and the PUSCH. In the case that the random access message corresponds to the PRACH and the PUSCH, one part of content corresponding to the random access message, such as a preamble (preamble), may be transmitted through the PRACH; and the other part of content corresponding to the random access message, such as a terminal device identifier or a cell radio network temporary identifier (Cell Radio Network Temporary Identifier, C-RNTI), may be transmitted by the PUSCH.

Optionally, in S110, there may be one or more PUSCH transmission occasions associated with one PRACH transmission occasion. In other words, an association relationship between the PRACH transmission occasion and the PUSCH transmission occasion may be one of a one-to-one association relationship, a one-to-many association relationship and many-to-many association relationship.

For example, as shown in FIG. 2, there is a one-to-one association relationship between the PRACH occasion 1 and the PUSCH occasion 1. Or, as shown in FIG. 3, there is a one-to-many association relationship among the PRACH occasion 1, the PUSCH occasion 1, the PUSCH occasion 2 and the PUSCH occasion 3.

Optionally, in some embodiments, in S110, there are a plurality of PUSCH transmission occasions. Correspondingly, in S110, that the PUSCH corresponding to the random access message is transmitted on the PUSCH transmission occasion includes: the PUSCH corresponding to the random access message is transmitted on a target PUSCH transmission occasion in the PUSCH transmission occasion.

Specifically, in some embodiments, the target PUSCH transmission occasion may be any one PUSCH transmission occasion in a plurality of PUSCH transmission occasions.

Specifically, in some other embodiments, a time interval between the target PUSCH transmission occasion and the PRACH transmission occasion is a target time interval, and the target time interval is less than or equal to a time interval between other PUSCH transmission occasions in the PUSCH transmission occasions and the PRACH transmission occasion.

In other words, if at least two PUSCH occasions in the plurality of PUSCH occasions associated with the PRACH occasion are valid, the terminal device may select at least one PUSCH occasion in at least two PUSCH occasions to transmit a PUSCH (for example, msg A PUSCH) corresponding to a random access message. Or, further, the terminal device may select a PUSCH occasion closest to the PRACH occasion in a time domain to transmit a PUSCH (for example, msg A PUSCH) corresponding to the random access message.

For example, as shown in FIG. 3, the PRACH occasion 1 is valid, the PUSCH occasion 1 is not valid, and the PUSCH occasion 2 and the PUSCH occasion 3 are valid. The terminal device may initiate transmission of the PRACH (for example, msg A PRACH) corresponding to the random access message on the PRACH occasion 1, and transmit the PRACH (for example, msg A PRACH) corresponding to the random access message on any one of the PUSCH occasion 2 and the PUSCH occasion 3. Or, further, the terminal device may transmit the PRACH (for example, msg A PRACH) corresponding to the random access message in the PUSCH occasion 2.

Specifically, in some other embodiments, the terminal device works on an unlicensed frequency band, and a time interval between the PRACH transmission occasion and the target PUSCH transmission occasion is less than or equal to a preset time interval. That is, if, for one PRACH occasion, there is a time interval between the PUSCH occasion associated with the PRACH occasion and the PRACH occasion and the time interval is less than or equal to a certain preset value, the terminal device initiates msg A transmission.

Specifically, in some other embodiments, the terminal device works on an unlicensed frequency band, and a total duration of the PRACH transmission occasion and the target PUSCH transmission occasion is less than or equal to a preset duration. That is, if, for one PRACH occasion, the total duration of the PUSCH occasion associated with the PRACH occasion and the PRACH occasion is less than or equal to a certain preset value, the terminal device initiates msg A transmission.

Generally, when the terminal device works on an unlicensed frequency band, it is necessary to do listen before talk (LBT) before a message is transmitted, that is, clear channel assess (Clear Channel Assess, CCA) or extended clear channel assess (extended Clear Channel Assess, eCCA) to listen a channel, that is, perform energy detection (Energy Detection, ED). When the energy is less than a certain threshold, the channel is judged to be empty, and transmission may be started.

In related art, the terminal device may adopt the following three LBT categories: LBT category 1: direction transmission without any CAA, which must be used when the channel has been acquired and the transmission conversion interval is less than 16 us. LBT category 2: 25 us channel listening, which may be used when the channel is acquired for a specific signal and the maximum continuous transmission length should be less than a certain value, for example, 1 ms. LBT category 3: channel listening with fusion random back-off, where different parameters are set for different priorities, and the maximum transmission lengths after the channel is acquired finally are different. It may be seen that different LBT categories correspond to different maximum continuous transmission lengths, so the preset duration is relevant to the LBT category adopted by the terminal device.

Based on all the above embodiments, if in S110, the PRACH transmission occasion is valid and the PUSCH transmission occasion is invalid, the PRACH transmission occasion is abandoned to transmit the PRACH corresponding to the random access message. That is, if one PRACH transmission occasion does not have a PUSCH transmission occasion associated with the PRACH transmission occasion, the terminal device does not initiate msg A transmission on the PRACH transmission occasion.

Further, according to the present invention, in the case that the PRACH transmission occasion is valid and the PUSCH transmission occasion is invalid, the terminal device abandons the PUSCH transmission occasion, and the terminal device does not transmit the PUSCH (for example, msg A PUSCH) corresponding to the random access message.

For example, as shown in FIG. 2, the PRACH occasion 1 is valid, the PUSCH occasion 1 is not valid, and the terminal device does not initiate msg A transmission on the PRACH occasion 1, that is, the terminal device does not transmit msg A PRACH on the PRACH occasion 1 and does not transmit msg A PUSCH on the PUSCH occasion 1.

FIG. 4 is a schematic flowchart of an information transmission method according to the present disclosure. The method in FIG. 4 may be performed by the terminal device. As shown in FIG. 4, the method includes:
S210: if a physical random access channel (PRACH) transmission occasion is valid and a physical uplink shared channel (PUSCH) transmission occasion associated with the PRACH transmission occasion is invalid, a PRACH corresponding to a random access message is transmitted on the PRACH transmission occasion.

Therefore, according to the method shown in FIG. 4, the terminal device only transmits the PRACH corresponding to the random access message on the PRACH transmission occasion in the case that the PARCH transmission occasion is valid and the PUSCH transmission occasion associated with the PRACH transmission occasion is invalid. Therefore, interference to the downlink transmission caused by PUSCH transmission on the invalid PUSCH may be avoided.

Optionally, in S210, the random access message is msg 1 in a 4-step (4-step) random access process, where the msg 1 only carries PRACH, or the msg 1 only includes a PRACH preamble (preamble). For example, as shown in FIG. 2, the PRACH occasion 1 is valid, the PUSCH occasion 1 is not valid, and the terminal device may initiate msg 1 transmission on the PRACH occasion 1, that is, the terminal device transmits msg 1 on the PRACH occasion 1.

The PRACH preamble of the msg 1 and the PRACH preamble of the msg A in the method shown in FIG. 1 may be independent. For example, a network device may configure the PRACH preamble of the msg A and the PRACH preamble of the msg 1 in advance, and the terminal device selects one PRACH preamble from the PRACH preamble of the configured msg 1 as msg 1 to transmit.

The PRACH preamble of the msg 1 and the PRACH preamble of the msg A in the method shown in FIG. 1 may be non-independent. For example, the network device may configure a PRACH preamble set shared by the PRACH preamble of the msg 1 and the PRACH preamble of the msg A in advance, and the terminal device selects one PRACH preamble from the configured PRACH preamble set as the msg 1 to transmit.

Optionally, in S210, there may be one or more PUSCH transmission occasions associated with one PRACH transmission occasion. In other words, an association relationship between the PRACH transmission occasion and the PUSCH transmission occasion may be one of a one-to-one association relationship, a one-to-many association relationship and many-to-many association relationship.

For example, as shown in FIG. 2, there is a one-to-one association relationship between the PRACH occasion 1 and the PUSCH occasion 1. Or, as shown in FIG. 3, there is a one-to-many association relationship among the PRACH occasion 1, the PUSCH occasion 1, the PUSCH occasion 2 and the PUSCH occasion 3.

Optionally, the terminal device works on an unlicensed frequency band; and
That the PRACH corresponding to the random access message is transmitted on the PRACH transmission occasion in S210 includes: if a time interval between the PRACH transmission occasion and the PUSCH transmission occasion is greater than or equal to a preset time interval, the PRACH corresponding to the random access message is transmitted on the PRACH transmission occasion. That is, if, for one valid PRACH occasion, the PUSCH occasion associated with the PRACH occasion is invalid, there is a time interval between the PUSCH occasion and the PRACH occasion and the time interval is greater than a certain preset value, the terminal device transmits msg 1 on the PRACH occasion.

Optionally, the terminal device works on an unlicensed frequency band; and
That the PRACH corresponding to the random access message is transmitted on the PRACH transmission occasion in S210 includes: if a total duration of the PRACH transmission occasion and the PUSCH transmission occasion is greater than or equal to a preset duration, the PRACH corresponding to the random access message is transmitted on the PRACH transmission occasion. That is, if, for one valid PRACH occasion, the PUSCH occasion associated with the PRACH occasion is invalid and the total duration of the PUSCH occasion and the PRACH occasion is greater than a certain preset value, the terminal device transmits msg 1 on the PRACH occasion.

Generally, when the terminal device works on an unlicensed frequency band, it is necessary to do LBT before a message is transmitted, that is, clear channel assess (Clear Channel Assess, CCA) or extended clear channel assess (extended Clear Channel Assess, eCCA) to listen a channel, that is, perform energy detection (Energy Detection, ED). When the energy is less than a certain threshold, the channel is judged to be empty, and transmission may be started.

In related art, the terminal device may adopt the following three LBT categories: LBT category 1: direction transmission without any CAA, which must be used when the channel has been acquired and the transmission conversion interval is less than 16 us. LBT category 2: 25 us channel listening, which may be used when the channel is acquired for a specific signal and the maximum continuous transmission length should be less than a certain value, for example, 1 ms. LBT category 3: channel listening with fusion random back-off, where different parameters are set for different priorities, and the maximum transmission lengths after the channel is acquired finally are different. It may be seen that different LBT categories correspond to different maximum continuous transmission lengths, so the preset duration is relevant to the LBT category adopted by the terminal device.

Based on all the above, if the terminal device is configured that the 2-step random access process or the 4-step random access process may be performed, the terminal device may perform the 2-step random access process and transmit the msg A of the 2-step random access process in the case that the PRACH transmission occasion is valid and the PUSCH transmission occasion associated with the PRACH transmission occasion is valid, that is, the PRACH corresponding to the msg A is transmitted on the PRACH transmission occasion, and the PUSCH corresponding to the msg A is transmitted on the PUSCH transmission occasion; or the terminal device may perform the 4-step random access process and transmit the msg 1 of the 4-step random access process in the case that the PRACH transmission occasion is valid and the PUSCH transmission occasion associated with the PRACH transmission occasion is invalid, that is, the PRACH corresponding to the msg 1 is transmitted on the PRACH transmission occasion.

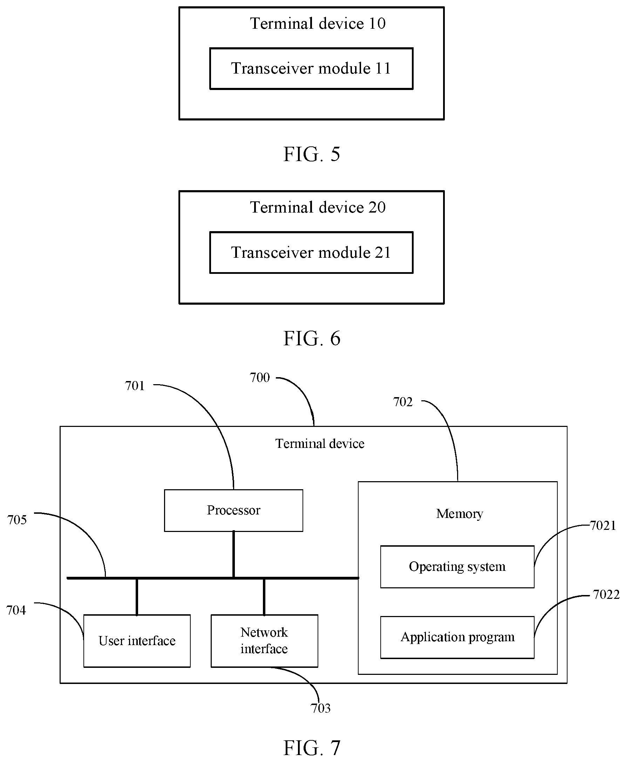

The information transmission method according to the present disclosure is described above in detail with reference to FIG. 1 to FIG. 4, and the terminal device according to the present disclosure is described below in detail with reference to FIG. 5.

FIG. 5 is a structural schematic diagram of a terminal device according to the present disclosure. As shown in FIG. 5, the terminal device 10 includes:
a transceiver module 11, used to, if a physical random access channel (PRACH) transmission occasion is valid and a physical uplink shared channel (PUSCH) transmission occasion associated with the PRACH transmission occasion is valid, transmit a PRACH corresponding to a random access message on the PRACH transmission occasion, and transmit a PUSCH corresponding to the random access message on the PUSCH transmission occasion.

Optionally, the transceiver module 11 is further used to
if the PRACH transmission occasion is valid and the PUSCH transmission occasion is invalid, abandon using the PRACH transmission occasion to transmit the PRACH corresponding to the random access message.

Optionally, there are a plurality of PUSCH transmission occasions; and
the transceiver module 11 is specifically used to: transmit the PUSCH corresponding to the random access message on a target PUSCH transmission occasion in the PUSCH transmission occasions.

Optionally, a time interval between the target PUSCH transmission occasion and the PRACH transmission occasion is a target time interval, and the target time interval is less than or equal to a time interval between other PUSCH transmission occasions in the PUSCH transmission occasions and the PRACH transmission occasion.

Optionally, the terminal device works on an unlicensed frequency band, and a time interval between the PRACH transmission occasion and the target PUSCH transmission occasion is less than or equal to a preset time interval.

Optionally, the terminal device works on an unlicensed frequency band, and a total duration of the PRACH transmission occasion and the target PUSCH transmission occasion is less than or equal to a preset duration.

Optionally, the preset duration is relevant to the listen before talk (LBT) category adopted by the terminal device.

The terminal device provided by the present disclosure can realize each process of implementing the terminal device in the method in FIG. 1, which is not elaborated here to avoid repetition.

FIG. 6 is a structural schematic diagram of a terminal device according to the present disclosure. As shown in FIG. 6, the terminal device 20 includes:
a transceiver module 21, used to, if a physical random access channel (PRACH) transmission occasion is valid and a physical uplink shared channel (PUSCH) transmission occasion associated with the PRACH transmission occasion is invalid, transmit a PRACH corresponding to a random access message on the PRACH transmission occasion.

Optionally, the terminal device works on an unlicensed frequency band; and
the transceiver module 21 is specifically used to:
if a time interval between the PRACH transmission occasion and the PUSCH transmission occasion is greater than or equal to a preset time interval, transmit the PRACH corresponding to the random access message on the PRACH transmission occasion.

Optionally, the terminal device works on an unlicensed frequency band; and
the transceiver module 21 is specifically used to:
if a total duration occupied by the PRACH transmission occasion and the PUSCH transmission occasion is greater than or equal to a preset duration, transmit the PRACH corresponding to the random access message on the PRACH transmission occasion.

Optionally, the preset duration is relevant to the listen before talk (LBT) category adopted by the terminal device.

The terminal device provided by the present disclosure can realize each process of implementing the terminal device in the method in FIG. 4, which is not elaborated here to avoid repetition.

FIG. 7 is a block diagram of a terminal device according to the present disclosure. As shown in FIG. 7, the terminal device 700 includes at least one processor 701, a memory 702, a user interface 703, and at least one network interface 704. The components in the terminal device 700 are coupled together through a bus system 705. It may be understood that the bus system 705 is used to implement connection and communication between these components. In addition to a data bus, the bus system 705 also includes a power bus, a control bus, and a status signal bus. However, for clarity of description, various buses are marked as the bus system 705 in FIG. 5.

The user interface 703 may include a display, a keyboard, or a clicking device (for example, a mouse, a trackball (trackball)), a touch panel, or a touchscreen.

It may be understood that the memory 702 in the present disclosure may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 702 of the system and the method described in the present disclosure is intended to include, but is not limited to, these and any other suitable types of memories.

In some implementation manners, the memory 702 stores the following elements: executable modules or data structures, a subset thereof, or an extended set thereof: an operating system 7021 and an application program 7022.

The operating system 7021 includes various system programs, for example, a framework layer, a kernel library layer, and a driver layer, and is used to implement various basic services and process hardware-based tasks. The application program 7022 includes various application programs, for example, a media player (Media Player) and a browser (Browser), and is used to implement various application services. A program for implementing the method in the present disclosure may be included in the application 7022.

In the present disclosure, the terminal device 700 further includes: a computer program which is stored on a memory 702 and capable of operating on a processor 701, where the computer program, when being executed by a processor 701, enables the processor to implement each process of the method in FIG. 1 and FIG. 2. The same technical effect can be achieved. In order to avoid repetition, details are not described herein again.

The method disclosed in the present disclosure may be applied to the processor 701 or implemented by the processor 701. The processor 701 may be an integrated circuit chip having a signal processing capability. During implementation, the steps of the foregoing method may be completed by hardware integrated logic circuits in the processor 701 or instructions in a form of software. The processor 701 may be a general-purpose processor, a digital signal processor (Digital Signal Processor, DSP), an application specific integrated circuit (Application Specific Integrated Circuit, ASIC), a field programmable gate array (Field Programmable Gate Array, FPGA) or other programmable logic devices, a discrete gate or a transistor logic device and a discrete hardware component. The processor may implement or perform the methods, the steps, and logical block diagrams that are disclosed in the present disclosure. The general-purpose processor may be a microprocessor or may be any conventional processor or the like. The steps of the method disclosed in the present disclosure may be directly executed by a hardware decoding processor or by a combination of hardware and software modules in the decoding processor. The software module may be located in a mature computer-readable storage medium in this field such as a random access memory, a flash memory, a read-only memory, a programmable read-only memory or an electrically erasable programmable memory, or a register. The computer readable storage medium is located in the memory 702, and the processor 701 reads information from the memory 702 and completes the steps of the foregoing method in combination with hardware of the processor. Specifically, the computer readable storage medium stores a computer program, and when the computer program is executed by the processor 701, the steps of the method shown in FIG. 1 to FIG. 4 are implemented.

It may be understood that the present disclosure may be implemented by hardware, software, firmware, middleware, microcode, or a combination thereof. For implementation with hardware, the processing module may be implemented in one or more application specific integrated circuits (Application Specific Integrated Circuit, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Array, FPGA), a general-purpose processor, a controller, a microcontroller, a microprocessor, another electronic unit for implementing the functions of the present disclosure, or a combination thereof.

For implementation with software, technologies described in the present disclosure may be implemented by executing functional modules (for example, a process and a function) in the present disclosure. Software code may be stored in a memory and executed by a processor. The memory may be implemented in the processor or outside the processor.

The present disclosure further provide a computer-readable storage medium. The computer-readable storage medium stores a computer program, and when a processor executes the computer program, the processes of the foregoing method are implemented and the same technical effect can be achieved. To avoid repetition, details are not described herein again. The computer readable storage medium may be a read-only memory (Read-Only Memory, ROM), a random access memory (Random Access Memory, RAM), a magnetic disk, a compact disc, or the like.

It should be noted that in this specification, the terms "comprise", "include", and any other variants thereof are intended to cover non-exclusive inclusion, so that a process, a method, an article, or an apparatus that includes a series of elements not only includes these very elements, but also includes other elements not expressly listed, or also includes elements inherent to this process, method, article, or apparatus. Without being subject to further limitations, an element defined by a phrase "including a ..." does not exclude presence of other identical elements in the process, method, article, or apparatus that includes the very element.

According to the foregoing descriptions of the implementations, a person skilled in the art may clearly understand that the foregoing methods may be implemented by using software and a required universal hardware platform, or certainly may be implemented by using hardware. However, in many cases, the former is a better implementation. Based on such an understanding, the technical solutions of the present disclosure essentially or the part contributing to the prior art may be implemented in a form of a software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the present disclosure.

## Claims

1. An information transmission method, applied to a terminal device, comprising:
if a physical random access channel, PRACH, transmission occasion is valid and there is no valid physical uplink shared channel, PUSCH, transmission occasion associated with the PRACH transmission occasion, transmitting (S210) a PRACH corresponding to a random access message on the PRACH transmission occasion, and abandoning transmission for a PUSCH corresponding to the random access message;
wherein the PRACH transmission occasion is valid if there is no conflict between a time domain resource in which the PRACH transmission occasion is located and a downlink, DL, resource or DL transmission.

2. The method according to claim 1, wherein the terminal device works on an unlicensed frequency band; and
the transmitting (S210) the PRACH corresponding to the random access message on the PRACH transmission occasion comprises:
if a time interval between the PRACH transmission occasion and the PUSCH transmission occasion is greater than or equal to a preset time interval, transmitting the PRACH corresponding to the random access message on the PRACH transmission occasion.

3. The method according to claim 1, wherein the terminal device works on an unlicensed frequency band; and
the transmitting (S210) the PRACH corresponding to the random access message on the PRACH transmission occasion comprises:
if a total duration occupied by the PRACH transmission occasion and the PUSCH transmission occasion is greater than or equal to a preset duration, transmitting the PRACH corresponding to the random access message on the PRACH transmission occasion.

4. The method according to claim 3, wherein
the preset duration is relevant to a listen before talk, LBT, category used by the terminal device.

5. The method according to any one of claims 1 to 4, wherein the random access message is an msg A in a 2-step random access process.

6. A terminal device (20), comprising:
a transceiver module (21), used to, if a physical random access channel, PRACH, transmission occasion is valid and there is no valid physical uplink shared channel, PUSCH, transmission occasion associated with the PRACH transmission occasion, transmit a PRACH corresponding to a random access message on the PRACH transmission occasion, and abandon transmission for a PUSCH corresponding to the random access message;
wherein the PRACH occasion is valid if there is no conflict between a time domain resource in which the PRACH occasion is located and a downlink, DL resource or DL transmission.

7. The terminal device (20) according to claim 6, wherein the terminal device works on an unlicensed frequency band; and
the transceiver module (21) is used to:
if a time interval between the PRACH transmission occasion and the PUSCH transmission occasion is greater than or equal to a preset time interval, transmit the PRACH corresponding to the random access message on the PRACH transmission occasion.

8. The terminal device (20) according to claim 1, wherein
the terminal device works on an unlicensed frequency band; and
the transceiver module (21) is used to:
if a total duration occupied by the PRACH transmission occasion and the PUSCH transmission occasion is greater than or equal to a preset duration, transmitting the PRACH corresponding to the random access message on the PRACH transmission occasion.

9. The terminal device (20) according to claim 8, wherein
the preset duration is relevant to a listen before talk, LBT, category used by the terminal device.

10. The terminal device (20) according to any one of claims 6 to 9, wherein the random access message is an msg A in a 2-step random access process.

11. A terminal device (700), comprising: a memory (702), a processor (701) and a computer program which is stored in the memory (702) and executable on the processor (701), wherein when the computer program is executed by the processor (701), steps of the information transmission method according to any one of claims 1 to 5 are implemented.

12. A computer readable medium, storing a computer program, wherein when the computer program is executed by a processor (701), steps of the information transmission method according to any one of claims 1 to 5 are implemented.

## Patentansprüche

1. Ein Informationsübertragungsverfahren, das auf ein Endgerät angewendet wird und Folgendes beinhaltet:
wenn ein physischer Direktzugriffskanalübertragungsanlass, PRACH-Übertragungsanlass, gültig ist und es keinen gültigen physischen gemeinsam genutzten Uplink-Kanal-Übertragungsanlass, PUSCH-Übertragungsanlass, gibt, der mit dem PRACH-Übertragungsanlass assoziiert ist, Übertragen (S210) eines PRACH, der einer Direktzugriffsnachricht entspricht, bei dem PRACH-Übertragungsanlass und Abbrechen der Übertragung für einen PUSCH, der der Direktzugriffsnachricht entspricht;
wobei der PRACH-Übertragungsanlass gültig ist, wenn es keinen Konflikt zwischen einer Zeitbereichsressource, in der sich der PRACH-Übertragungsanlass befindet, und einer Downlink-Ressource, DL-Ressource, oder DL-Übertragung gibt.

2. Verfahren gemäß Anspruch 1, wobei das Endgerät auf einem unlizenzierten Frequenzband arbeitet; und
das Übertragen (S210) des PRACH, der der Direktzugriffsnachricht entspricht, bei dem PRACH-Übertragungsanlass Folgendes beinhaltet:
wenn ein Zeitintervall zwischen dem PRACH-Übertragungsanlass und dem PUSCH-Übertragungsanlass größer oder gleich einem voreingestellten Zeitintervall ist,
Übertragen des PRACH, der der Direktzugriffsnachricht entspricht, bei dem PRACH-Übertragungsanlass.

3. Verfahren gemäß Anspruch 1, wobei das Endgerät auf einem unlizenzierten Frequenzband arbeitet; und
das Übertragen (S210) des PRACH, der der Direktzugriffsnachricht entspricht, bei dem PRACH-Übertragungsanlass Folgendes beinhaltet:
wenn eine Gesamtdauer, die von dem PRACH-Übertragungsanlass und dem PUSCH-Übertragungsanlass belegt wird, größer oder gleich einer voreingestellten Dauer ist,
Übertragen des PRACH, der der Direktzugriffsnachricht entspricht, bei dem PRACH-Übertragungsanlass.

4. Verfahren gemäß Anspruch 3, wobei
die voreingestellte Dauer für eine Listen-before-Talk-Kategorie, LBT-Kategorie, relevant ist, die von dem Endgerät verwendet wird.

5. Verfahren gemäß einem der Ansprüche 1 bis 4, wobei die Direktzugriffsnachricht eine msg A in einem 2-Schritt-Direktzugriffsprozess ist.

6. Ein Endgerät (20), das Folgendes beinhaltet:
ein Sendeempfängermodul (21), das verwendet wird, um, wenn ein physischer Direktzugriffskanalübertragungsanlass, PRACH-Übertragungsanlass, gültig ist und es keinen gültigen physischen gemeinsam genutzten Uplink-Kanal-Übertragungsanlass, PUSCH-Übertragungsanlass, gibt, der mit dem PRACH-Übertragungsanlass assoziiert ist, einen PRACH, der einer Direktzugriffsnachricht entspricht, bei dem PRACH-Übertragungsanlass zu übertragen und die Übertragung für einen PUSCH, der der Direktzugriffsnachricht entspricht, abzubrechen;
wobei der PRACH-Anlass gültig ist, wenn es keinen Konflikt zwischen einer Zeitbereichsressource, in der sich der PRACH-Anlass befindet, und einer Downlink-Ressource, DL-Ressource, oder DL-Übertragung gibt.

7. Endgerät (20) gemäß Anspruch 6, wobei das Endgerät auf einem unlizenzierten Frequenzband arbeitet; und
das Sendeempfängermodul (21) verwendet wird, um:
wenn ein Zeitintervall zwischen dem PRACH-Übertragungsanlass und dem PUSCH-Übertragungsanlass größer oder gleich einem voreingestellten Zeitintervall ist, den PRACH, der der Direktzugriffsnachricht entspricht, bei dem PRACH-Übertragungsanlass zu übertragen.

8. Endgerät (20) gemäß Anspruch 1, wobei
das Endgerät auf einem unlizenzierten Frequenzband arbeitet; und
das Sendeempfängermodul (21) verwendet wird, um:
wenn eine Gesamtdauer, die von dem PRACH-Übertragungsanlass und dem PUSCH-Übertragungsanlass belegt wird, größer oder gleich einer voreingestellten Dauer ist,
Übertragen des PRACH, der der Direktzugriffsnachricht entspricht, bei dem PRACH-Übertragungsanlass.

9. Endgerät (20) gemäß Anspruch 8, wobei
die voreingestellte Dauer für eine Listen-before-Talk-Kategorie, LBT-Kategorie, relevant ist, die von dem Endgerät verwendet wird.

10. Endgerät (20) gemäß einem der Ansprüche 6-9, wobei die Direktzugriffsnachricht eine msg A in einem 2-Schritt-Direktzugriffsprozess ist.

11. Ein Endgerät (700), das Folgendes beinhaltet: einen Speicher (702), einen Prozessor (701) und ein Computerprogramm, das in dem Speicher (702) gespeichert ist und auf dem Prozessor (701) ausführbar ist, wobei, wenn das Computerprogramm von dem Prozessor (701) ausgeführt wird, Schritte des Informationsübertragungsverfahrens gemäß einem der Ansprüche 1 bis 5 implementiert werden.

12. Ein computerlesbares Medium, das ein Computerprogramm speichert, wobei, wenn das Computerprogramm von einem Prozessor (701) ausgeführt wird, Schritte des Informationsübertragungsverfahrens gemäß einem der Ansprüche 1 bis 5 implementiert werden.

## Revendications

1. Un procédé de transmission d'informations, appliqué à un dispositif terminal, comprenant :
si une occasion de transmission de canal physique d'accès aléatoire, PRACH (*physical random access channel*), est valide et qu'il n'y a pas d'occasion de transmission de canal physique partagé de liaison montante, PUSCH (*physical uplink shared channel*), valide associée à l'occasion de transmission de PRACH, le fait de transmettre (S210) un PRACH correspondant à un message d'accès aléatoire sur l'occasion de transmission de PRACH, et d'abandonner la transmission pour un PUSCH correspondant au message d'accès aléatoire ;
dans lequel l'occasion de transmission de PRACH est valide s'il n'y a pas de conflit entre une ressource de domaine temporel dans laquelle l'occasion de transmission de PRACH est située et une ressource de liaison descendante, DL (*downlink*), ou une transmission DL.

2. Le procédé selon la revendication 1, dans lequel le dispositif terminal fonctionne sur une bande de fréquences sans licence ; et
le fait de transmettre (S210) le PRACH correspondant au message d'accès aléatoire sur l'occasion de transmission de PRACH comprend :
si un intervalle de temps entre l'occasion de transmission de PRACH et l'occasion de transmission de PUSCH est supérieur ou égal à un intervalle de temps prédéfini, le fait de transmettre le PRACH correspondant au message d'accès aléatoire sur l'occasion de transmission de PRACH.

3. Le procédé selon la revendication 1, dans lequel le dispositif terminal fonctionne sur une bande de fréquences sans licence ; et
la fait de transmettre (S210) le PRACH correspondant au message d'accès aléatoire sur l'occasion de transmission de PRACH comprend :
si une durée totale occupée par l'occasion de transmission de PRACH et l'occasion de transmission de PUSCH est supérieure ou égale à une durée prédéfinie, le fait de transmettre le PRACH correspondant au message d'accès aléatoire sur l'occasion de transmission de PRACH.

4. Le procédé selon la revendication 3, dans lequel
la durée prédéfinie est pertinente pour une catégorie « écouter avant de parler », LBT (*listen before talk*), utilisée par le dispositif terminal.

5. Le procédé selon l'une quelconque des revendications 1 à 4, dans lequel le message d'accès aléatoire est un msg A dans un processus d'accès aléatoire en 2 étapes.

6. Un dispositif terminal (20), comprenant :
un module émetteur-récepteur (21), utilisé pour, si une occasion de transmission de canal physique d'accès aléatoire, PRACH, est valide et qu'il n'y a pas d'occasion de transmission de canal physique partagé de liaison montante, PUSCH, valide associée à l'occasion de transmission de PRACH, transmettre un PRACH correspondant à un message d'accès aléatoire sur l'occasion de transmission de PRACH, et abandonner la transmission pour un PUSCH correspondant au message d'accès aléatoire ;
dans lequel l'occasion de transmission de PRACH est valide s'il n'y a pas de conflit entre une ressource de domaine temporel dans laquelle l'occasion de transmission de PRACH est située et une ressource de liaison descendante, DL, ou une transmission DL.

7. Le dispositif terminal (20) selon la revendication 6, le dispositif terminal fonctionnant sur une bande de fréquences sans licence ; et
le module émetteur-récepteur (21) étant utilisé pour :
si un intervalle de temps entre l'occasion de transmission de PRACH et l'occasion de transmission de PUSCH est supérieur ou égal à un intervalle de temps prédéfini, transmettre le PRACH correspondant au message d'accès aléatoire sur l'occasion de transmission de PRACH.

8. Le dispositif terminal (20) selon la revendication 1,
le dispositif terminal fonctionnant sur une bande de fréquences sans licence ; et
le module émetteur-récepteur (21) étant utilisé pour :
si une durée totale occupée par l'occasion de transmission de PRACH et l'occasion de transmission de PUSCH est supérieure ou égale à une durée prédéfinie, le fait de transmettre le PRACH correspondant au message d'accès aléatoire sur l'occasion de transmission de PRACH.

9. Le dispositif terminal (20) selon la revendication 8, dans lequel la durée prédéfinie est pertinente pour une catégorie « écouter avant de parler », LBT, utilisée par le dispositif terminal.

10. Le dispositif terminal (20) selon l'une quelconque des revendications 6 à 9, dans lequel le message d'accès aléatoire est un msg A dans un processus d'accès aléatoire en 2 étapes.

11. Un dispositif terminal (700), comprenant : une mémoire (702), un processeur (701) et un programme d'ordinateur qui est stocké dans la mémoire (702) et exécutable sur le processeur (701), dans lequel lorsque le programme d'ordinateur est exécuté par le processeur (701), des étapes du procédé de transmission d'informations selon l'une quelconque des revendications 1 à 5 sont mises en œuvre.

12. Un support lisible par ordinateur, stockant un programme d'ordinateur, dans lequel lorsque le programme d'ordinateur est exécuté par un processeur (701), des étapes du procédé de transmission d'informations selon l'une quelconque des revendications 1 à 5 sont mises en œuvre.
